# EUROPÄISCHE PATENTSCHRIFT

(11) **EP 1 892 078 B1**
(45) Veröffentlichungstag und Bekanntmachung des Hinweises auf die Patenterteilung: **18.04.2012**
(21) Anmeldenummer: 07016717.6
(22) Anmeldetag: 27.08.2007
(51) Int. Cl.: B29C 35/02, B29C 70/44, B29C 35/08

(54) **Verfahren und Vorrichtung zum Vorformen von Kohlenstofffaser-Halbzeugen für die Herstellung von Faserverbundbauteilen**
Method and device for preforming carbon fibre semi-finished products for manufacturing fibre composite parts
Procédé et dispositif destinés au préformage de demi-produits en fibres de carbone pour la fabrication d'éléments composites fibreux

(30) Priorität: 26.08.2006 DE 102006040049
(43) Veröffentlichungstag der Anmeldung: 27.02.2008
(73) Patentinhaber: Deutsches Zentrum für Luft- und Raumfahrt e.V., 51147 Köln (DE); Technische Universität Braunschweig, 38106 Braunschweig (DE); Airbus Deutschland GmbH, 21129 Hamburg (DE)
(72) Erfinder: Kleineberg, Markus, 30966 Hemingen (DE); Herbeck, Lars, 38173 Veltheim (DE); Ströhlein, Tobias, 38110 Braunschweig (DE); Frauenhofer, Michael, 38118 Braunschweig (DE); Dilger, Klaus, 38106 Braunschweig (DE); Herrmann, Axel, 21684 Stade (DE)
(74) Vertreter: Rehberg Hüppe + Partner

(56) Entgegenhaltungen:
- EP-A- 0 355 423
- EP-A- 0 440 410
- WO-A-90/08027
- WO-A-94/04623
- DE-A1- 10 048 000
- JP-A- 5 162 207
- US-A- 5 240 542
- US-A- 5 869 814
- US-A1- 2005 035 115

## Beschreibung

### TECHNISCHES GEBIET DER ERFINDUNG

Die Erfindung bezieht sich auf ein Verfahren zum Vorformen von Kohlenstofffaserhalbzeugen für die Herstellung von Faserverbundbauteilen. Weiterhin bezieht sich die Erfindung auf eine Vorrichtung zur Durchführung eines solchen Verfahrens mit den Merkmalen des Oberbegriffs des Patentanspruchs 7.

Das Vorformen von Kohlenstofffaserhalbzeugen für die Herstellung von Faserverbundbauteilen wird gemeinhin auch als Preforming bezeichnet. Um das Preforming zu ermöglichen, werden die Kohlenstofffasern, aus denen die Kohlenstoffhalbzeuge lagenweise ausgebildet werden, mit einem wärmeaktivierbaren, das heißt aufschmelz- oder vernetzbaren Bindemittel benetzt, das lokal erwärmt wird und die aneinander gedrückten Lagen aus den Kohlenstofffasern miteinander verklebt.

### STAND DER TECHNIK

Bei einfachen Verfahren zum Preforming von Kohlenstofffaserhalbzeugen werden die einzelnen Lagen aus den mit Bindemitteln benetzten Kohlenstofffasern aufeinander aufgebügelt. Dies ist eine sehr zeitraubende und hohen manuellen Aufwand verursachende Vorgehensweise. Die Erwärmung des Bindemittels erfolgt hier durch Wärmeübergang über die Kontaktflächen des Bügeleisens mit den Kohlenstofffasern bzw. dem Bindemittel. Bei dieser Art des Wärmeübertrags können immer nur vergleichsweise wenige Lagen aufgebügelt werden, wenn diese zuverlässig aneinander fixiert werden sollen.

Ein Verfahren mit den Merkmalen des Oberbegriffs des Patentanspruchs und eine Vorrichtung mit den Merkmalen des Oberbegriffs des Patentanspruchs 7 sind aus der US 4,871 412 bekannt. Diese dienen tatsächlich weniger zum Preforming als dazu, so genannte Prepregs, d. h. bereits mit Matrixharz vorgetränkte Lagen aus Kohlenstofffasern direkt zu den gewünschten Faserverbundwerkstoffen miteinander zu verbinden. Dabei werden die miteinander zu verbindenden Lagen aus Kohlenstofffasern auf einer Glasplatte angeordnet, unter der ein Induktor, d. h. eine Quelle für ein magnetisches Wechselfeld, die im Wesentlichen auf einer Spule aufbaut, angeordnet ist. Durch das von dem Induktor abgestrahlte magnetische Wechselfeld, das eine Frequenz in dem Bereich von 2 bis 4 MHz aufweist, soll eine Widerstandsaufheizung der Kohlenstofffasern und in der Folge ein Aufschmelzen des diese umgebenden thermoplastischen Materials erfolgen. Zum aneinander Andrücken der Lagen aus den Kohlenstofffasern bei aufgeschmolzenem thermoplastischem Material sind Andruckwalzen vorgesehen, die die Lagen an die Glasscheibe andrücken. Geeignet soll auch ein magnetisches Wechselfeld mit einer Frequenz in dem größeren Bereich von 1 bis 10 MHz sein. Eine Frequenz von 400 kHz oder weniger soll hingegen für ein induktives Aufheizen der Kohlenstofffasern ungeeignet sein. Bei den hohen Frequenzen oberhalb 1 MHz ist es tatsächlich so, dass die von dem magnetischen Wechselfeld induzierten Wirbelströme sehr kleine Radien aufweisen und so auch innerhalb der einzelnen Kohlenstofffasern fließen und diese im Sinne einer Widerstandsheizung aufheizen können. Bei diesen hohen Frequenzen tritt allerdings der Nachteil auf, dass die Eindringtiefe des elektromagnetischen Wechselfelds nur sehr gering ist. D. h. dickere Kohlenstofffaserhalbzeuge aus einer Vielzahl einzelner Lagen können auf diese Weise nicht fixiert werden, weil mit dem magnetischen Wechselfeld immer nur die äußeren Lagen zu erreichen, d. h. ausreichend zu erwärmen sind, um das dort vorhandene Bindmittel zu aktivieren.

Aus der DE 692 25 480 T2 sind ein weiteres Verfahren mit den Merkmalen des Oberbegriffs des Patentanspruchs 1 und eine Vorrichtung mit den Merkmalen des Patentanspruchs 7 bekannt. Hier werden die Kohlenstofffasern gezielt senkrecht zu dem magnetischen Wechselfeld ausgerichtet, um in den Kohlenstofffasern selbst keine Wirbelströme zu induzieren. Stattdessen wird ein so genanntes Vorzugserhitzungsmaterial vorgesehen, das so ausgerichtet und ausgebildet ist, dass das magnetische Wechselfeld in ihm Wirbelströme induziert, um es nach dem Prinzip der Widerstandsheizung zu erhitzen. Bei diesem Vorzugserhitzungsmaterial kann es sich um einen Zuschlag aus magnetischen Partikeln zu dem die Kohlenstofffasern benetzenden Bindemittel handeln. Die Frequenzen des magnetischen Wechselfelds, bei denen eine Aufheizung des mit den magnetischen Partikeln versetzten Bindemittels beobachtet wurde, reichen hinab bis unter 10 kHz. In den Vergleichsbeispielen der DE 692 25 480 wird eine Erwärmung durch Induktion elektrischer Ströme in den Kohlenstofffasern selbst erst oberhalb 80 kHz beobachtet. Wie bereits angesprochen wurde, sinkt die Eindringtiefe der elektromagnetischen Strahlung in das Volumen eines Kohlenstofffaserhalbzeugs mit zunehmender Frequenz immer weiter ab. Um eine vergleichsweise niedrigere Frequenz des magnetischen Wechselfelds nutzen zu können, müssen gemäß der Offenbarung der DE 692 25 480 T2 dem Bindemittel magnetische Partikel zugeschlagen werden. Ein Zuschlag aus magnetischen Partikeln zu dem Bindemittel ist aufgrund der damit einhergehenden Gewichtserhöhung und Veränderung der mechanischen, elektrischen und magnetischen Eigenschaften des späteren Verbundbauteils jedoch in aller Regel unerwünscht.

Aus der US 2005/035115 A1 sind eine Vorrichtung und ein Verfahren zum Ausbilden von Verbundwerkstücken bekannt, bei den in eine Matrix eingebettete Faser in einer Vakuumblase eingeschlossen werden, an die Suszeptoren für ein magnetisches Wechselfeld ganzflächig angrenzen. Um die Suszeptoren herum ist eine Magnetspule angeordnet, die ihrerseits in eine die Form der Vakuumblase bestimmende Negativform eingebettet ist. Zum Ausbilden des Verbundwerkstücks wird dieses innerhalb der Vakuumblase durch induktives Aufheizen der Suszeptoren erwärmt.

Aus der US 2003/062118 A1 ist ein Prepreg-Verfahren zur Herstellung von Verbundwerkstücken bekannt, dem mehrere Prepreg-Lagen zunächst durch Einkoppeln eines magnetischen Wechselfelds in die Kohlenstofffasern im Durchlauf vorerwärmt werden. Anschließend erfolgt eine weitere konventionelle Erwärmung durch Wärmestrahlung. Danach werden die Prepreg-Lagen miteinander verpresst und anschließend abgekühlt. Dieses Verfahren soll Geschwindigkeitsvorteile gegenüber dem üblichen Vakuumprepregverfahren aufweisen.

Die US 4,783,362 beschreibt ein Prepreg-Verfahren zur Herstellung von Verbundwerkstücken in einem Vakuumsack, wobei eine Aushärtung durch Induktion ohne nähere Angaben hierzu erwähnt ist.

Die US 5,240,542 offenbart das Verbinden von Stücken aus Faserverbundmaterial mit in Matrixharz eingebetteten Kohlenstofffasern durch Induktionsheizung. Hierbei werden zwei Stücke aus Faserverbundmaterial in einem Kontaktbereich zwischen den beiden Stücken verbunden, indem der Kontaktbereich zwischen den beiden Stücken durch Induktion erhitzt und die Stücke gleichzeitig aneinander gedrückt werden. Die Induktionsheizung wird mittels Strom durch elektrische Leiter hervorgerufen. Die elektrischen Leiter sind in ein externes Presswerkzeug eingebettet. Der Druck auf das Presswerkzeug kann mittels eines über dem Presswerkzeug angeordneten Vakuumsackes aufgebracht werden.

### AUFGABE DER ERFINDUNG

Der Erfindung liegt die Aufgabe zugrunde, ein Verfahren gemäß Patentanspruch 1 und eine Vorrichtung mit den Merkmalen des Oberbegriffs des Patentanspruchs 7 aufzuzeigen, mit denen ein schnelles und effektives Preforming auch bei dickeren Kohlenstofffaserhalbzeugen aus einer Vielzahl von Lagen aus mit Bindemittel benetzten Kohlenstofffasern ohne massiven Eingriff in die Zusammensetzung des Bindemittels möglich ist.

### LÖSUNG

Die Aufgabe der Erfindung wird erfindungsgemäß durch ein Verfahren mit den Merkmalen des Patentanspruchs 1 und eine Vorrichtung mit den Merkmalen des Patentanspruchs 7 gelöst. Bevorzugte Ausführungsformen des neuen Verfahrens sind in den Unteransprüchen 2 bis 6 definiert, während die Unteransprüche 8 bis 10 bevorzugte Ausführungsformen der neuen Vorrichtung betreffen.

### BESCHREIBUNG DER ERFINDUNG

Bei der Erfindung werden die Lagen aus den Kohlenstofffasern durch eine Druckdifferenz aneinander gedrückt, die über einen die Lagen bedeckenden Vakuumsack hinweg anliegt. Auf diese Weise werden die Lagen aus den Kohlenstofffasern im gesamten Volumen des jeweiligen Kohlenstofffaserhalbzeugs in sehr innigen Kontakt gebracht, der überraschender Weise bei einer Vielzahl kommerzieller Materialien für die Ausbildung von Kohlenstofffaserhalbzeugen zu einer elektrischen Leitung zwischen den einzelnen Kohlenstofffasern zumindest einer Lage führt. Dies ermöglicht es, das magnetische Wechselfeld so einzukoppeln, dass es elektrische Ströme durch die Kohlenstofffasern hindurch induziert. Mit anderen Worten fließen die induzierten elektrischen Ströme bei der Erfindung nicht im Volumen einzelner Kohlenstofffasern sondern die Kohlenstofffasern entlang und zwischen diesen. Der bei der Erfindung eingesetzte Vakuumsack behindert das Einkoppeln des magnetischen Wechselfelds nicht. Auch die bei einem Vakuumsack, der üblicherweise zum Evakuieren eines Kohlenstofffaserhalbzeugs vor dem injizieren eines Matrixharzes verwendet wird, häufig auftretenden Falten und Verwerfungen sind bei der vorliegenden Erfindung unkritisch, da der Induktor auch dann das magnetische Wechselfeld in das Kohlenstofffaserhalbzeug unterhalb des Vakuumsacks einkoppeln kann, wenn er in einem freien Abstand oberhalb des Vakuumsacks gehalten wird, d. h. ohne ihn zu kontaktieren. Hierdurch werden sowohl Beschädigungen des Vakuumsacks als auch Behinderungen des Induktors beim Bewegen in verschiedene Bereiche, in denen die Lagen aus den Kohlenstofffasern aneinander fixiert werden sollen, vermieden.

Konkret kann bei der vorliegenden Erfindung das magnetische Wechselfeld von dem Induktor mit einer Frequenz von 10 bis 30 kHz erzeugt werden. Durch den innigen Kontakt der einzelnen Kohlenstofffasern zumindest innerhalb einer Lage aus den Kohlenstofffasern können trotz dieser vergleichsweise niedrigen Frequenz, die jedoch eine gute Eindringtiefe des magnetischen Wechselfelds durch den Vakuumsack und in das Kohlenstofffaserhalbzeug sicherstellt, elektrische Ströme durch die Kohlenstofffasern hindurch induziert werden, die für eine Widerstandsaufheizung der Kohlenstofffasern und damit des diese benetzenden Bindemittels ausreichend sind. Einer Modifizierung des Bindemittels bedarf es hierzu nicht.

Wie bereits angedeutet wurde, ist es bei der vorliegenden Erfindung bevorzugt, wenn der Induktor in dem freien Abstand zu dem Vakuumsack gegenüber dem Vakuumsack automatisch in verschiedene Positionen verfahren wird, in denen dann die Lagen aus den Kohlenstofffasern aneinander fixiert werden. Da der Induktor als einziges verfahrenes Teil dabei keinen Kräften außer den Beschleunigungskräften unterliegt, kann eine Verfahreinrichtung für den Induktor sehr einfach aufgebaut sein.

Um die Leitfähigkeit der Kohlenstofffasern einer Lage untereinander sicherzustellen, sollten die einzelnen Lagen möglichst Winkelabweichungen zueinander aufweisen, z.B in Form eines sogenannten multiaxialen Verbunds. Besonders bevorzugt ist es, wenn die einzelnen Lagen des Kohlenstofffaserhalbzeugs jeweils aus Kohlenstofffasergeweben bestehen. Zumindest sollten einige von ihnen derartige Kohlenstofffasergewebe aufweisen.

Wenn bei der vorliegenden Erfindung ein seine elektrische Leitfähigkeit erhöhender Zuschlag eingesetzt wird, sorgt dieser Zuschlag dafür, dass die elektrische Leitfähigkeit zwischen den einzelnen Kohlenstofffasern erhöht wird. Es geht nicht darum, dem Bindemittel einen teilchenförmigen Zuschlag aus magnetischen oder elektrische leitfähigen Partikeln zuzugeben. Der die elektrische Leitfähigkeit des Bindemittels erfindungsgemäß erhöhende Zuschlag muss beispielsweise auch kein metallischer Zuschlag sein. Natürlich ist aber bei einem solchen Zuschlag darauf zu achten, dass weder die chemischen Eigenschaften des Bindemittels selbst, noch der Matrix des herzustellenden Faserverbundwerkstoffs, noch die gewünschten elektrischen, d.h. in der Regel dielektrischen Eigenschaften des letztendlichen Faserverbundwerkstoffs gestört werden.

Trotz der bei der vorliegenden Erfindung bereits sehr großen Eindringtiefe des magnetischen Wechselfelds kann es sinnvoll sein, einen weiteren Induktor auf der dem im freien Abstand zu dem Vakuumsack gehaltenen Induktor gegenüberliegenden Seite der Lagen aus den Kohlenstofffasern zu halten, wobei das magnetische Wechselfeld im Bereich der Kohlenstofffasern mit beiden Induktoren gemeinsam erzeugt wird. Je nach Ausbildung der dem Vakuum abgekehrten Seite der Umhüllung des Kohlenstofffaserhalbzeugs, die erforderlich ist, um die erfindungsgemäße Druckdifferenz aufzubauen, kann der weitere Induktor ebenfalls im Abstand zu dieser Umhüllung gehalten und verfahren werden oder in auch direktem Kontakt mit dieser stehen.

Die Andrückeinrichtung für die einzelnen Lagen des Kohlenstofffaserhalbzeugs der neuen Vorrichtung weist neben dem Vakuumsack eine Pumpe auf, um die Druckdifferenz über den Vakuumsack hinweg anzulegen. Dabei kann die Pumpe außerhalb des Vakuumsacks, d. h. auf der dem Kohlenstofffaserhalbzeug gegenüberliegenden Seite einen Überdruck aufbringen. Bevorzugt ist es jedoch, wenn zumindest zusätzlich der Bereich des Kohlenstofffaserhalbzeugs mit der Pumpe evakuiert wird, weil dies für das anschließende Injizieren eines Matrixharzes in das Kohlenstofffaserhalbzeug sowieso erforderlich ist. Außerdem wird dadurch die mögliche Annäherung der Kohlenstofffasern aneinander maximiert.

Die Spule des Induktors der neuen Vorrichtung ist an einen Wechselstromgenerator angeschlossen, der die Spule mit einem Wechselstrom einer bevorzugten Frequenz von 10 bis 30 kHz beaufschlagt.

Für den Induktor ist vorzugsweise ein automatisch ansteuerbarer Verfahrantrieb vorgesehen, der ihn im Abstand zu dem Vakuumsack verfährt. Bei dreidimensionalen Formen des Kohlenstofffaserhalbzeugs unter dem Vakuumsack, die beispielsweise durch eine dreidimensional gekrümmte starre Form unterhalb des Kohlenstofffaserhalbzeugs hervorgerufen werden können, kann der Verfahrantrieb den Verlauf des Vakuumsacks in der Z-Achse aus dem entsprechenden Verlauf der Form berücksichtigen. Es kann aber auch ein Abstandsmesser an dem Induktor vorgesehen sein, mit dessen Hilfe ein bestimmter Abstand des Induktors von dem Vakuumsack aktiv eingeregelt wird.

Wenn ein weiterer, dem im freien Abstand zu dem Vakuumsack geführten Induktor über die Lagen aus den Kohlenstofffasern hinweg gegenüberliegender Induktor vorgesehen ist, wobei beide Induktoren gemeinsam das magnetische Wechselfeld im Bereich der Kohlenstofffasern erzeugen, ist es bevorzugt, wenn die Verfahrbewegungen der beiden Induktoren zumindest in der x-y-Ebene miteinander gekoppelt sind, so dass die beiden Induktoren immer aufeinander ausgerichtet sind.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Prinzipskizze zur Funktionsweise des neuen Verfahrens und der neuen Vorrichtung zum Vorformen von Kohlenstofffaserhalbzeugen für die Herstellung von Faserverbundbauteilen in einem schematischen Querschnitt.
- **Fig. 2**: zeigt eine Explosionsansicht eines in Fig. 1 enthaltenen Schichtaufbaus.
- **Fig. 3**: zeigt einen Induktor oberhalb eines mit einem Vakuum abgedeckten Kohlenstofffaserhalbzeugs in einer Seitenansicht.
- **Fig. 4**: zeigt die Anordnung gemäß Fig. 3 in einer Ansicht von oben; und
- **Fig. 5**: zeigt eine zu Fig. 3 alternative Anordnung mit zwei Induktoren.

### FIGURENBESCHREIBUNG

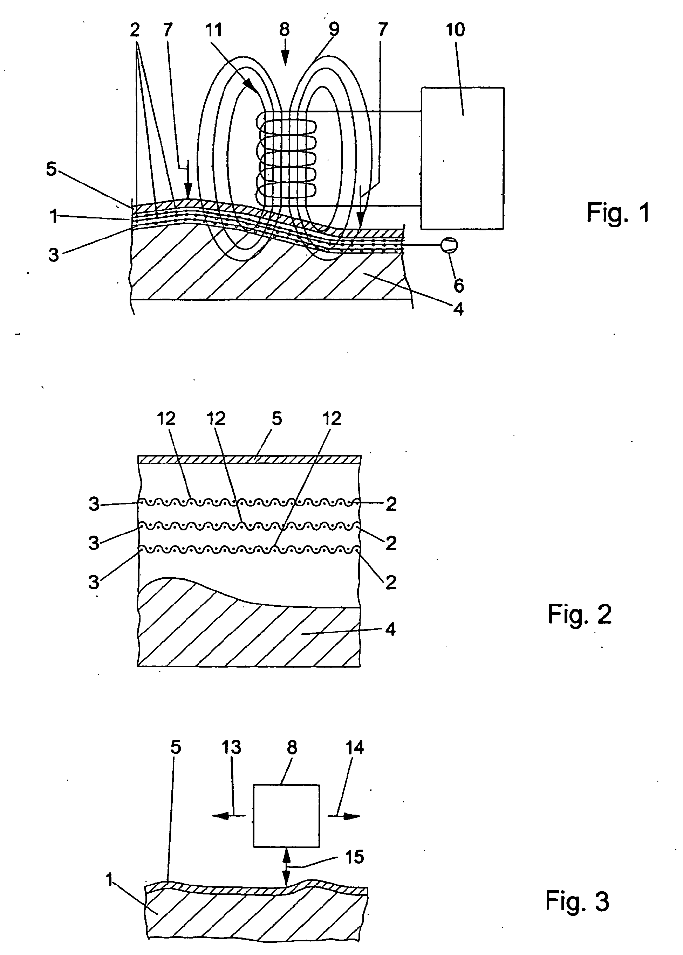

In **Fig. 1** ist skizziert, wie ein Kohlenstofffaserhalbzeug 1 aus mehreren Lagen 2 aus Kohlenstofffasern 3 auf einer starren und gasdichten Form 4 angeordnet und darauf von einem Vakuumsack 5 abgedeckt ist. An den Zwischenbereich des Kohlenstofffaserhalbzeugs 1 zwischen dem Vakuumsack 5 und der Form 4, der in einem hier nicht sichtbaren Randbereich gasdicht abgedichtet ist, ist eine Pumpe 6 angeschlossen, mit der dieser Zwischenraum evakuierbar ist. Dies bedeutet, dass Luft, die sich zunächst gemeinsam mit dem Kohlenstofffaserhalbzeug in dem Zwischenraum befindet, abgepumpt wird. Hierdurch sinkt der Gasdruck in dem Zwischenraum unter den Atmosphärendruck ab. In der Folge baut sich eine Druckdifferenz über den flexiblen Vakuumsack 5 auf, die in einen durch Pfeile 7 angedeuteten Druck resultiert, welcher den Vakuumsack 5 auf die Form 4 hin beaufschlagt und dadurch die Lagen 2 der Kohlenstofffasern 3 aneinanderdrückt. Die hieraus resultierende Relativanordnung der Lagen 3 wird dadurch fixiert, dass ein hier nicht separat dargestelltes plastisches Bindemittel, mit dem die Faser 3 benetzt sind, lokal erwärmt wird, so dass die aneinander angedrückten Fasern 3 miteinander verkleben. Zum lokalen Erwärmen des Bindemittels ist ein Induktor 8 vorgesehen, der im Wesentlichen aus einer Spule 9 besteht, die von einem Wechselstromgenerator 10 mit einem Wechselstrom einer Frequenz in der Größenordnung 20 kHz beaufschlagt wird. Das resultierende magnetische Wechselfeld 11, das hier durch Feldlinien angedeutet ist, erstreckt sich durch den Vakuumsack 5 bis in das Kohlenstofffaserhalbzeug 1 hinein und sogar bis an die Form 4 heran, so dass es das gesamte Kohlenstofffaserhalbzeug 1 durchsetzt. Dabei induziert das magnetische Wechselfeld 11 elektrische Ströme durch die Kohlenstofffasern 3 hindurch, die zu einer Widerstandsaufheizung zunächst der Kohlenstofffasern selbst und in der Folge des diese benetzenden Bindemittels führen. Mit elektrischen Strömen durch die Kohlenstoffffasern hindurch sind dabei konkret solche Ströme gemeint, die ringförmig durch Bereiche verschiedener einzelner Kohlenstofffasern unterschiedlicher Orientierung hindurch fließen.

Wenn der Induktor 8 abgeschaltet oder in eine andere Position verfahren wird, kühlt das zunächst erwärmte Bindemittel wieder ab, so dass die über die ganze Zeit aneinander angedrückten Fasern anschließend aneinander fixiert sind. Danach kann das Kohlenstofffaserhalbzeug 1 mit den aneinander fixierten Lagen 2 aus den Kohlenstofffasern 3 nach Ablassen der Unterdrucks zwischen dem Vakuumsack 5 und der Form 4 von der Form 4 abgenommen werden, oder es kann direkt auf der Form 4 unterhalb des Vakuumsacks 5 zur Ausbildung der Matrix eines durch die Kohlenstofffasern 3 verstärkten Faserverbundwerkstoffs mit Harz injiziert werden.

**Fig. 2** zeigt in einer Explosionsansicht die starre Form 4, die darauf angeordneten Lagen 2 aus den Kohlenstofffasern 3 und den Vakuumsack 5. Deutlich wird, dass jede Lage 2 ein Kohlenstofffasergewebe 12 ist, das miteinander verwobene Kohlenstofffasern 3 aufweist, die in zwei zueinander orthogonalen Richtungen verlaufen und dabei wechselseitig in engem Kontakt stehen. Dieser enge Kontakt wird durch die Druckbeaufschlagung über den Vakuumsack 5 noch weiter gefördert, so dass in Folge des magnetischen Wechselfelds 11 gemäß Fig. 1 Wirbelströme innerhalb jedes Kohlenstofffasergewebes 12 durch Abschnitte einzelner Kohlenstofffasern 3 hintereinander fließen können.

**Fig. 3** zeigt noch weiter schematisiert die Anordnung des Induktors 8 oberhalb des Vakuumsacks 5 über dem Kohlenstofffaserhalbzeug 1. Der Induktor 8 ist über dem Vakuumsack 5 in Richtung von Pfeilen 13 und 14 verfahrbar. Dabei hält er einen freien Abstand 15 zu dem Vakuumsack 5 ein, um diesen nicht zu beschädigen und um von diesem beim Verfahren nicht behindert zu werden. Der Abstand 15 kann großzügig bemessen sein, um unter allen Umständen einen Kontakt des Induktors 8 mit dem Vakuumsack 5 zu verhindern, selbst wenn die Höhenlage des Induktors 8 nicht korrigiert wird. Der Abstand 15 kann aber auch beispielsweise mit Hilfe von Abstandssensoren auf einen konstanten kleineren Wert eingeregelt werden.

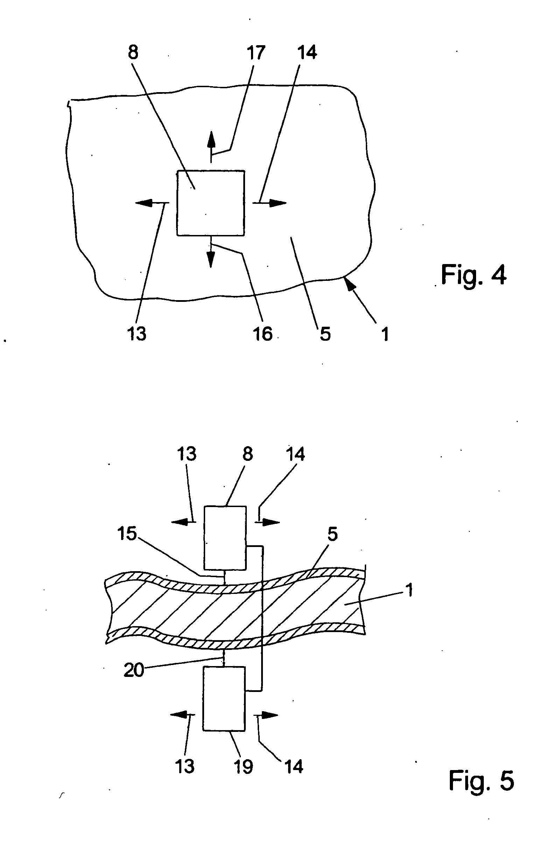

**Fig. 4** skizziert in einer Ansicht von oben, dass mit dem Induktor 8 beliebige Positionen über dem Vakuumsack 5 in den Richtungen der Pfeile 13 und 14 sowie 16 und 17 anfahrbar sind. Dies kann vollautomatisch geschehen, um die Lagen 2 des Kohlenstofffaserhalbzeugs 1 in einzelnen Punkten oder auch entlang von Linien durch lokales Aufschmelzen des die Kohlenstoffasern benetzenden Bindemittels aneinander zu fixieren.

**Fig. 5** zeigt eine Variante des neuen Verfahrens und der neuen Vorrichtung bei der zwei Induktoren vorgesehen sind. Neben dem Induktor 8, der dem Vakuumspannsack 5 gegenüberliegt ist ein weiterer Induktor 19 auf der anderen Seite des Kohlenstofffaserhalbzeugs 1 vorgesehen. Die Induktoren 8 und 19 erzeugen das sich durch das Kohlenstofffaserhalbzeug 1 hindurch erstreckende, hier aber nicht eingezeichnete magnetische Wechselfeld gemeinsam. Die Bewegung der beiden Induktoren 8 und 19 sind entsprechend in der x-y-Ebene, d. h. jeder in Richtung der Pfeile 13 und 14 sowie senkrecht zur Zeichenebene verlaufenden Richtung, gekoppelt. Der Abstand 15 des Induktors 8 von dem Vakuumsack 5 und ein Abstand 20 des Induktors 19 von der hier auch an ihrer Unterseite dreidimensional gekrümmten Form 4 können hingegen unabhängig voneinander sein oder beispielsweise auch konstant gehalten werden. Die Verwendung von zwei Induktoren 8 und 19 sorgt für eine besonders gleichmäßige Ausbildung des magnetischen Wechselfelds über die gesamte Dicke des Kohlenstofffaserhalbzeugs 1 hinweg und damit für eine besonders sichere Fixierung aller Lagen aus den Kohlenstofffasern aneinander.

### BEZUGSZEICHENLISTE

- 1: Kohlenstofffaserhalbzeug
- 2: Lage
- 3: Kohlenstofffaser
- 4: Form
- 5: Vakuumsack
- 6: Pumpe
- 7: Pfeil
- 8: Induktor
- 9: Spule
- 10: Wechselstromgenerator
- 11: magnetisches Feld
- 12: Kohlenstofffasergewebe
- 13: Pfeil
- 14: Pfeil
- 15: Abstand
- 16: Pfeil
- 17: Abstand
- 19: Induktor
- 20: Abstand

## Patentansprüche

1. Verfahren zum Vorformen von Kohlenstofffaserhalbzeugen für die Herstellung von Faserverbundbauteilen, wobei Lagen aus mit wärmeaktivierbarem Bindemittel benetzten, aber noch nicht mit Matrixharz getränkten Kohlenstofffasern durch lokale Erwärmung des Bindemittels und aneinander Andrücken fixiert werden, wobei die lokale Erwärmung des Bindemittels mittels Induktion elektrischer Ströme durch ein von einem Induktor erzeugtes magnetisches Wechselfeld hervorgerufen wird, wobei die Lagen (2) aus den Kohlenstofffasern (3) durch eine Druckdifferenz aneinander gedrückt werden, die über einen die Lagen (2) bedeckenden Vakuumsack (5) hinweg anliegt, wobei das magnetische Wechseifeld (11) von dem in freiem Abstand (15) zu dem Vakuumsack gehaltenen Induktor (8) durch den Vakuumsack (5) hindurch so eingekoppelt wird, dass es elektrische Ströme durch die Kohlenstofffasern (3) hindurch induziert.

2. Verfahren nach Anspruch 1, **dadurch gekennzeichnet, dass** das magnetische Wechselfeld (11) von dem Induktor (8) mit einer Frequenz von 10 bis 30 kHz erzeugt wird.

3. Verfahren nach Anspruch 1 oder 2, **dadurch gekennzeichnet, dass** der Induktor (8) in dem freien Abstand (15) zu dem Vakuumsack (5) gegenüber dem Vakuumsack (5) automatisch in verschiedene Positionen verfahren wird, in denen dann die Lagen (2) aus den Kohlenstofffasern (3) aneinander fixiert werden.

4. Verfahren nach einem der Ansprüche 1 bis 3, **dadurch gekennzeichnet, dass** die Lagen (2) aus Kohlenstofffasergeweben (12) aufgebaut werden.

5. Verfahren nach einem der Ansprüche 1 bis 4, **dadurch gekennzeichnet, dass** dem Bindemittel ein seine elektrische Leitfähigkeit erhöhender Zuschlag zugesetzt wird.

6. Verfahren nach einem der Ansprüche 1 bis 5, **dadurch gekennzeichnet, dass** ein weiterer Induktor (19) auf der dem im freien Abstand (15) zu dem Vakuumsack (5) gehaltenen Induktor (8) gegenüberliegenden Seite der Lagen (2) aus den Kohlenstofffasern (3) gehalten wird, wobei das magnetische Wechselfeld (11) im Bereich der Kohlenstofffasern (3) mit beiden Induktoren (8, 19) gemeinsam erzeugt wird.

7. Vorrichtung zur Durchführung des Verfahrens zum Vorformen von Kohlenstofffaserhalbzeugen für die Herstellung von Faserverbundbauteilen nach einem der Ansprüche 1 bis 5, mit einer Heizung zum lokalen Erwärmen des thermoplastischen Bindemittels mit dem die Kohlenstofffasern benetzt sind und mit einer Andrückeinrichtung zum aneinander Andrücken der Lagen aus den Kohlenstofffasem, wobei die Heizung einen Induktor zur Erzeugung eines magnetischen Wechselfelds aufweist, mit dem elektrische Ströme induzierbar sind, wobei die Andrückeinrichtung einen Vakuumsack) (5) zum Abdeckten der Lagen (2) aus den Kohlenstofffasern (3) und eine Pumpe (6) aufweist, **dadurch gekennzeichnet, dass** die Pumpe (6) vorgesehen ist, eine Druckdifferenz über den Vakuumsack (5) hinweg anzulegen, wobei der Induktor (8) in freiem Abstand (15) zu dem Vakuumsack (5) geführt und dazu vorgesehen ist, das magnetische Wechselfeld (11) durch den Vakuumsack hindurch so einzukoppeln, dass es elektrische Ströme durch die Kohlenstofffasern (3) hindurch induziert.

8. Vorrichtung nach Anspruch 7, **dadurch gekennzeichnet, dass** der Induktor (8) an einen Wechselstromgenerator (10) angeschlossen ist, der ihn mit einem Wechselstrom einer Frequenz von 10 bis 30 kHz beaufschlagt.

9. Vorrichtung nach Anspruch 7 oder 8, **dadurch gekennzeichnet, dass** ein automatisch ansteuerbarer Verfahrantrieb für den Induktor (8) im Abstand (15) zu dem Vakuumsack (5) vorgesehen ist.

10. Vorrichtung nach einem der Ansprüche 7 bis 9, **dadurch gekennzeichnet, dass** ein weiterer, dem im freien Abstand (15) zu dem Vakuumsack (5) geführten induktor (8) über die Lagen (2) aus den Kohlenstofffasern (3) hinweg gegenüberliegender induktor (19) vorgesehen ist, wobei beide Induktoren (8, 19) gemeinsam das magnetische Wechselfeld (11) im Bereich der Kohlenstofffasern (3) erzeugen.

## Claims

1. Method of pre-forming carbon fibre semi-finished products for the manufacture of fibre composite parts, wherein layers of carbon fibres wetted with heat-activatable binder but not yet impregnated with matrix resin are fixed by locally heating the binder and pressing them against each other, wherein locally heating the binder is caused by means of inducing electric currents by a magnetic alternating field generated by an inductor, wherein the layers (2) of the carbon fibres (3) are pressed against each other by a pressure difference, which is present across a vacuum bag (5) covering the layers (2), wherein the magnetic alternating field (11) is coupled-in by the inductor (8) held at a free distance (15) to the vacuum bag through the vacuum bag (5) in such a way that it induces electrical currents through the carbon fibres (3).

2. Method of claim 1, **characterized in that** the magnetic alternating field (11) is generated by the inductor (8) at a frequency of 10 to 30 kHz.

3. Method of claim 1 or 2, **characterized in that** the inductor (8), at the free distance (15) to the vacuum bag (5), is automatically moved into different positions with regard to the vacuum bag (5), in which the layers (2) of the carbon fibres (3) are then fixed to each other.

4. Method of any of the claims 1 to 3, **characterized in that** the layers (2) are built of carbon fibre tissue (12).

5. Method of any of the claims 1 to 4, **characterized in that** a supplement increasing the electric conductivity of the binder is added to the binder.

6. Method of any of the claims 1 to 5, **characterized in that** a further inductor (19) is held at that side of the layers (2) of the carbon fibres (3) opposite to the inductor (8) held at the free distance (15) to the vacuum bag (5), wherein the magnetic alternating field (11) in the area of the carbon fibres (3) is generated by both inductors (8, 19) together.

7. Apparatus for executing the method of pre-forming carbon fibre semi-finished products for the manufacture of fibre composite parts according to any of the claims 1 to 5, comprising a heater for locally heating the thermoplastic binder with which the carbon fibres are wetted, and comprising a compressor device for compressing the layers of the carbon fibres, wherein the heater comprises an inductor for generating a magnetic alternating field by which electrical currents are inducible, wherein the compressor device comprises a vacuum bag (5) for covering the layers (2) of the carbon fibres (3) and a pump (6), **characterized in that** the pump is provided for applying a pressure difference across the vacuum bag (5), wherein the inductor (8) is guided at a free distance (15) to the vacuum bag (5) and provided for coupling-in the magnetic alternating field (11) through the vacuum bag in such a way that it induces electric currents through the carbon fibres (3).

8. The apparatus of claim 7, **characterized in that** the inductor (8) is connected to an alternating current generator (10) which subjects it to an alternating current at a frequency of 10 to 30 kHz.

9. The apparatus of claim 7 or 8, **characterized in that** an automatically controllable moving drive is provided for the inductor (8) at the distance (15) to the vacuum bag (5).

10. The apparatus of any of the claims 7 to 9, **characterized in that** a further inductor (19) is provided opposite to the inductor (8) guided at the free distance (15) to the vacuum bag (5) across the layers (2) of the carbon fibres (3), wherein both inductors (8, 19) together generate the magnetic alternating field (11) in the area of the carbon fibres (3).

## Revendications

1. Procédé pour préformer des demi-produits en fibre de carbone pour la fabrication d'éléments composites renforcés de fibres, dans lequel des couches à base de fibres de carbone humectées avec du liant activable à la chaleur, mais non encore imbibées avec de la résine de matrice sont fixées par réchauffement local du liant et appui des couches les unes contre les autres, le réchauffement local du liant étant effectué au moyen d'induction de courants électriques par un champ alternatif magnétique généré par un inducteur, les couches (2) à base des fibres de carbone (3) étant appuyées les unes contre les autres par une différence de pression qui s'applique au moyen d'un sac sous vide (5) recouvrant les couches (2), le champ alternatif (11) magnétique étant injecté à travers le sac sous vide (5) par l'inducteur (8) maintenu à libre distance (15) du sac sous vide de telle sorte qu'il induit des courants électriques à travers les fibres de carbone (3).

2. Procédé selon la revendication 1, **caractérisé en ce que** le champ alternatif (11) magnétique est généré par l'inducteur (8) avec une fréquence de 10 à 30 kHz.

3. Procédé selon la revendication 1 ou 2, **caractérisé en ce que** l'inducteur (8) est déplacé automatiquement dans différentes positions à la distance libre (15) du sac sous vide (5) par rapport au sac sous vide (5), positions dans lesquelles les couches (2) à base des fibres de carbone (3) sont fixées les unes contre les autres.

4. Procédé selon l'une des revendications 1à 3, **caractérisé en ce que** les couches (2) à base de tissus de fibre de carbone (12) sont mises en place.

5. Procédé selon l'une des revendications 1 à 4, **caractérisé en ce qu'**un granulat augmentant sa conductibilité électrique est ajouté au liant.

6. Procédé selon l'une des revendications 1 à 5, **caractérisé en ce qu'**un autre inducteur (19) est maintenu sur le côté, opposé à l'inducteur (8) maintenu à libre distance (15) du sac sous vide (5), des couches (2) à base des fibres de carbone (3), le champ alternatif (11) magnétique étant généré dans la zone des fibres de carbone (3) conjointement avec les deux inducteurs (8, 19).

7. Dispositif pour mettre en oeuvre le procédé pour préformer des demi-produits en fibre de carbone pour la fabrication d'éléments composites renforcés de fibre selon l'une des revendications 1 à 5, doté d'un chauffage pour le réchauffement local du liant thermoplastique avec lequel les fibres de carbone sont humectées et d'un dispositif de pression pour l'appui les unes contre les autres des couches à base des fibres de carbone, le chauffage présentant un inducteur pour générer un champ alternatif magnétique, avec lequel des courants électriques peuvent être induits, le dispositif d'appui présentant un sac sous vide (5) pour le recouvrement des couches (2) à base des fibres de carbone (3) et une pompe (6), **caractérisé en ce que** la pompe (6) est prévue pour appliquer une différence de pression par le sac sous vide (5), l'inducteur (8) étant guidé à libre distance (15) du sac sous vide (5) et étant prévu pour injecter le champ alternatif (11) magnétique à travers le sac sous vide de façon qu'il induise des courants électriques à travers les fibres de carbone (3).

8. Dispositif selon la revendication 7, **caractérisé en ce que** l'inducteur (8) est raccordé à un générateur de courant alternatif (10) qui l'alimente avec un courant alternatif d'une fréquence de 10 à 30 kHz.

9. Dispositif selon la revendication 7 ou 8, **caractérisé en ce qu'**un entraînement de déplacement activable automatiquement est prévu pour l'inducteur (8) à distance (15) du sac sous vide (5).

10. Dispositif selon l'une des revendications 7 à 9, **caractérisé en ce qu'**un autre inducteur (19) faisant face à l'inducteur (8) guidé à libre distance (15) du sac sous vide (5) par les couches (2) à base des fibres de carbone (3) est prévu, les deux inducteurs (8, 19) générant ensemble le champ alternatif (11) magnétique dans la zone des fibres de carbone (3).
